# EUROPÄISCHE PATENTSCHRIFT

(11) **EP 2 456 639 B1**
(45) Veröffentlichungstag und Bekanntmachung des Hinweises auf die Patenterteilung: **26.04.2017**
(21) Anmeldenummer: 10722336.4
(22) Anmeldetag: 26.05.2010
(51) Int. Cl.: B60R 21/017

(54) **ANORDNUNG UND VERFAHREN ZUR ANSTEUERUNG VON WENIGSTENS EINEM AUSLÖSEELEMENT FÜR EIN PERSONENSCHUTZMITTEL**
DEVICE AND METHOD FOR CONTROLLING AT LEAST A TRIGGER FOR HUMAN PROTECTION MEANS
DISPOSITIF ET MÉTHODE POUR CONTRÔLER AU MOINS UN ÉLÉMENT DE DÉCLENCHEMENT POUR MOYENS DE PROTECTION DES PERSONNES

(30) Priorität: 22.07.2009 DE 102009027918
(43) Veröffentlichungstag der Anmeldung: 30.05.2012
(73) Patentinhaber: Robert Bosch GmbH, 70442 Stuttgart (DE)
(72) Erfinder: JOUSSE, Alain, 70192 Stuttgart (DE)
(86) Internationale Anmeldenummer: PCT/EP2010/057202
(87) Internationale Veröffentlichungsnummer: WO 2011/009660

(56) Entgegenhaltungen:
- EP-A1- 1 767 409
- WO-A1-2008/139276

## Beschreibung

### Stand der Technik

Die Erfindung betrifft eine Anordnung bzw. ein Verfahren zur Ansteuerung von wenigstens einem Auslöseelement für ein Personenschutzmittel nach der Gattung der unabhängigen Patentansprüche.

Aus DE 10 2004 010 135 A1 ist eine Vorrichtung zur Bestromung wenigstens einer Zündendstufe mittels eines Zündstroms aus einer Energiereserve bekannt. Dabei wird zwischen der Energiereserve und der wenigstens einen Zündendstufe ein Spannungsregler vorgesehen, der eine Spannung an der wenigstens einen Zündendstufe auf einen vorgegebenen Wert einstellt.

Aus EP 1 767 409 A1 ist eine Zündschaltung bekannt, die wenigstens zwei High-Side-Schalter und einen Low-Side-Schalter aufweist. Über eine Schnittstelle ist die Zündschaltung mit einem Zündelement verbunden, das durch die Zündschaltung zur Zündung bestromt wird. Die wenigstens zwei High-Side-Schalter sind jeweils auf unterschiedlichen Substraten angeordnet.

### Offenbarung der Erfindung

Die erfindungsgemäße Anordnung bzw. das erfindungsgemäße Verfahren zur Ansteuerung von wenigstens einem Auslöseelement für ein Personenschutzmittel mit den Merkmalen der unabhängigen Patentansprüche haben demgegenüber den Vorteil, dass eine Skalierung durch parallel zueinander geschaltete Endstufen gegeben ist, wobei zumindest eine der

Endstufen eine Stromregelung und einen oder mehrere parallel geschaltete Endstufen aufweist. Damit werden die Nachteile vermieden, dass bei niedrigen Zündstromanforderungen überdimensionierte Transistoren vorgesehen sind und bei einer hohen Zündstromanforderung eine diskrete Lösung vorgesehen wird. Durch die Parallelisierung der Endstufen ist eine Skalierung darstellbar, d. h. höhere bzw. längere Auslösestromimpulse werden mit zwei oder mehr parallel geschalteten Endstufen realisiert. Damit können auch kleinere Endstufen verwendet werden. Dies führt zu einer Vereinfachung bzw. Kostenreduktion der Anordnung.

Unter der Anordnung ist vorliegend das Steuergerät bzw. der Teil der Schaltung des Steuergeräts zu verstehen, der die Ansteuerung des wenigstens einen Auslöseelements für ein Personenschutzmittel bewirkt.

Mit Ansteuern ist vorliegend die Aktivierung des Auslöseelements für das Personenschutzmittel gemeint. D. h. die Ansteuerung führt zur Bestromung des Auslöseelements und damit zur Zündung eines Sprengsatzes oder im elektromagnetischen Fall zur magnetischen Betätigung eines Personenschutzmittels.

Bei dem Auslöseelement handelt es sich beispielsweise um ein Zündelement, das eine Sprengladung letztlich darstellt, um beispielsweise einen Airbag oder Gurtstraffer pyrotechnisch zu aktivieren. Im Falle einer elektromagnetischen Aktuatorik wird beispielsweise mit dem Auslöseelement eine Spule bezeichnet, die durch den Stromfluss ein Magnetfeld erzeugt, das die Betätigung eines Personenschutzmittels bewirkt.

Unter einem Personenschutzmittel sind Personenschutzmittel wie Airbags, Gurtstraffer, crashaktive Kopfstützen, aber auch Fußgängerschutzmittel usw. zu verstehen.

Mit der High-Side-Schaltung ist die Schaltung bezeichnet, die zwischen dem Auslöseelement und der Energiequelle angeordnet ist und letztlich die Verbindung zwischen der Energiequelle und dem Auslöseelement herstellt. Da es sich bei der High-Side-Schaltung nicht nur letztlich um einen Schalter handelt, sondern auch um eine Regelung des Stroms, der von der Energiequelle zum Auslöseelement fließt, handelt, ist eine Stromregelung bei der High-Side-Schaltung und/oder bei der Low-Side-Schaltung, die die zweite Verbindung vom Auslöseelement zur Masse herstellt, vorgesehen. Mit der Energiequelle ist vorliegend beispielsweise eine Energiereserve mithin ein oder mehrere Kondensatoren zu verstehen und mit der Verbindung ist lediglich gemeint, dass ein Strom vorliegend fließen kann.

Unter Masse ist vorliegend die Masse im Steuergerät zu verstehen, die identisch mit der Masse am Chassis sein kann.

Die Regelung des Auslösestroms kann entweder in der High-Side-Schaltung oder der Low-Side-Schaltung oder sogar in beiden Schaltungen angeordnet sein. Die Regelung führt zur Einstellung des Auslösestroms auf eine bestimmte Form. Damit kann nur ein Stromwert mithin eine Amplitude gemeint sein, aber auch die Dauer eines Auslösestromimpulses. Auch Formungen des Impulses an sich sind dabei möglich. Eine bevorzugte Ausführungsform der Stromregelung vergleicht einen über einen Shunt gemessenen Zündstrom, der durch die Endstufe fließen wird, mit einem Referenzstrom. In Abhängigkeit von diesem Vergleich erfolgt die Ansteuerung der Endstufe, also der Basis oder des Gates des Endstufentransistors. Dieser Regelstrom überlagert das Ansteuersignal, dass den Endstufentransistor ansteuert, wenn ein Ansteuerungsfall erkannt wurde.

Mit den parallel geschalteten Endstufen sind parallel geschaltete Schaltungen gemeint, wobei zumindest eine der Endstufen eine Stromregelung und einen oder mehrere parallel geschaltete Transistoren aufweist. Ist nur eine Stromregelung vorzugsweise vorgesehen, dann regelt diese eine Stromregelung auch den Strom des oder der Transistoren der anderen Endstufe. Weiterhin ist es möglich, dass die Endstufe eine Vielzahl von parallel geschalteten Transistoren aufweist, die durch die Stromregelung angesteuert werden.

Diese Parallelschaltung von mindestens zwei Endstufen ist pro Auslöseelement vorgesehen, so dass bei der Bestromung eines Auslöseelements diese parallel geschalteten Endstufen für die Formung des Auslösestroms sorgen. Wie oben bereits angedeutet, kann die Parallelschaltung der wenigstens zwei Endstufen entweder in der High-Side-Schaltung oder in der Low-Side-Schaltung oder in beiden Schaltungen angeordnet sein.

Im Gegensatz zum Stand der Technik werden nunmehr mindestens zwei Endstufen mithin mindestens zwei Transistoren pro Auslöseelement eingesetzt, was zwar an sich ein Kostenfaktor darstellt, aber eine größere Bandbreite von Anforderungen an den Auslösestrom abdecken kann. Dadurch kann eine größere Zahl von beispielsweise ASICs mit der erfindungsgemäßen Anordnung hergestellt werden und damit wiederum ein Kostenvorteil erzielt werden.

Vorzugsweise sind die Teilzündströme, die durch die parallel geschalteten Endstufen fließen, gleich groß, um beispielsweise die thermische Belastung gleichmäßig zu verteilen und vor allem um die gleichen Transistoren parallel schalten zu können, was erhebliche Kostenvorteile mit sich bringt.

Durch die in den abhängigen Ansprüchen aufgeführten Maßnahmen und Weiterbildungen sind vorteilhafte Verbesserungen der in den unabhängigen Patentansprüchen angegebenen Anordnung bzw. des in den unabhängigen Patentansprüchen angegebenen Verfahrens möglich.

Vorteilhafter Weise weist eine jeweilige Endstufe eine nur dieser Endstufe zugeordnete jeweilige Stromregelung auf. Damit sind also im einfachsten Fall die beiden Endstufen jeweils mit einer Stromregelung versehen. Dies ermöglicht, dass jede Endstufe mithin jeder Transistor beispielsweise ein MOSFET oder ein anderer Leistungstransistor eine individuelle Stromregelung erfährt.

Vorteilhafter Weise weist nur eine einzige Endstufe eine nur ihr zugeordnete einzige Stromregelung verbunden, wobei diese Stromregelung jedoch wenigstens eine weitere Endstufe für die Regelung des Auslösestroms ansteuert. D. h. die Stromregelung überträgt ein Ansteuersignal sowohl an eine erste, als auch an eine zweite Endstufe, wobei die zweite Endstufe dabei keine eigene Stromregelung aufweist.

Es ist weiterhin vorteilhaft, dass die einzige Stromregelung alle Teilauslöseströme, die zu den jeweiligen Endstufen fließen, misst und in Abhängig von diesen Messungen die Transistoren der Endstufen ansteuert. Dies kann dazu führen, dass jeder Transistor das gleiche Signal von dieser Stromregelung erhält oder auch ein individuelles Signal. Damit würde eine mehrkanalige Stromregelung vorliegen. Wie oben angegeben wird diese Messung üblicherweise mittels eines Shunt-Widerstands ausgeführt.

Darüber hinaus ist es vorteilhaft, dass die parallel geschalteten Endstufen auf einem integrierten Schaltkreis angeordnet sind und eine Zusammenfassung der Teilzündströme außerhalb des integrierten Schaltkreises erfolgt. Damit werden die Vorteile eines integrierten Schaltkreises ausgeschöpft, aber die hohe Stromhöhe, die durch die Addition der Teilauslöseströme erfolgt, wird nur außerhalb dieses ASICs (= anwendungsspezifischer integrierter Schaltkreis) durch Überlagerung bzw. Addition der Ströme erzeugt. Dies vermeidet, dass für den integrierten Schaltkreis üblicherweise ein ASIC teuere Maßnahmen für diesen großen Auslösestrom vermieden werden können. Auch dies verbilligt die Ausführung der erfindungsgemäßen Anordnung. Jeder Endstufe ist dabei auf dem ASIC ein jeweiliger Ausgangspin zugeordnet, so dass ein große Flexibilität hinsichtlich der Verwendung der Endstufen besteht.

Vorteilhafter Weise können die High-Side-Schaltung und die Low-Side-Schaltung auf dem integrierten Schaltkreis angeordnet sein.

Vorteilhafter Weise ist die Regelung des Auslösestroms derart gestaltet, dass wenigstens ein Auslösestromimpuls mit durch die Regelung eingestellter Dauer und Höhe für das wenigstens eine Auslöseelement erzeugt wird. Damit wird beschrieben, dass durch die Regelung, die insbesondere an mehreren Transistoren erfolgt, durch Superposition ein komplexer Auslösestromimpuls erzeugt wird. Die Ansteuerung erfolgt beispielsweise bei einem Steuergerät zur Ansteuerung von Personenschutzmitteln durch einen Mikrocontroller im Steuergerät über die sogenannte SPI (Serial Peripherial Interface)-Leitung, also einer seriellen Schnittstelle zum ASIC, der die Zündkreisschaltung gemäß der Erfindung beinhaltet. Dafür weist der ASIC eine Verarbeitungslogik auf, die bewirkt, dass ein vorbestimmter Zündimpuls durch die Endstufen erzeugt wird. Entweder indem ein entsprechendes Ansteuersignal der Stromregelung überlagert wird oder indem die Stromregelung diesen Zündimpuls bewirkt.

Ausführungsbeispiele der Erfindung sind in der Zeichnung dargestellt und werden in der nachfolgenden Beschreibung näher erläutert.

Es zeigen
Figur 1 ein Blockschaltbild eines Steuergeräts zur Ansteuerung von Personenschutzmitteln mit der erfindungsgemäßen Anordnung,
Figur 2 ein erstes Ausführungsbeispiel für die erfindungsgemäße Anordnung,
Figur 3 ein zweites Ausführungsbeispiel für die erfindungsgemäße Anordnung,
Figur 4 ein drittes Ausführungsbeispiel für die erfindungsgemäße Anordnung,
Figur 5 typische Auslösestromimpulse,
Figur 6 ein Flussdiagramm des erfindungsgemäßen Verfahrens und
Figur 7 ein Schaltdiagramm der erfindungsgemäßen Regelung.

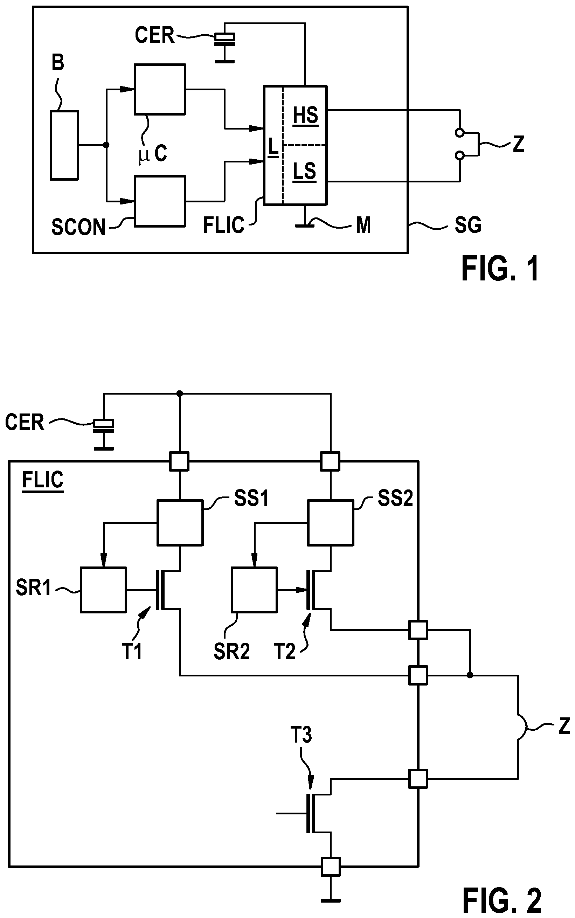

Figur 1 zeigt in einem Blockschaltbild ein Steuergerät SG mit der erfindungsgemäßen Anordnung. Die erfindungsgemäße Anordnung umfasst im Wesentlichen den integrierten Schaltkreis FLIC mit der Endstufe. Das Steuergerät SG weist jedoch zunächst einen Beschleunigungssensor B auf, dessen Signal zum einen in einem Mikrocontroller µC und zum anderen in einen Sicherheitscontroller SCON eingegeben werden. Damit werden die Beschleunigungssignale unabhängig voneinander ausgewertet und die Auswerteergebnisse beziehungsweise Ansteuersignale kommen über die SPI-Leitung und/oder andere Leitungen zum Endstufenschaltkreis FLIC und dort in einen Logikteil L.

In Abhängigkeit von einer logischen Verknüpfung, beispielsweise einer logischen UND-Verknüpfung, werden die Ansteuersignale des Mikrocontrollers µC und des Sicherheitscontrollers SCON verknüpft. Die Verknüpfung dient dazu, dass der Endstufenschaltkreis erkennt, dass das Auslöseelement Z angesteuert werden soll. Dann verbindet die High-Side-Schaltung HS das Auslöseelement Z mit der Energiereserve CER einem Kondensator, der von der Batteriespannung auf eine höhere Spannung aufgeladen wurde. Die Low-Side-Schaltung LS auf dem integrierten Schaltkreis FLIC verbindet das Auslöseelement Z mit der Masse M, die die Masse des Steuergeräts bzw. des Chassis darstellt. Die High-Side-Schaltung HS und die Low-Side-Schaltung LS können einen oder mehrere Transistoren als Leistungsschalter aufweisen. Diese Transistoren und die jeweilige Stromregelung bilden die erfindungsgemäßen Endstufen, von denen jeweils mindestens zwei parallel geschaltet sind.

Figur 2 zeigt ein erstes Ausführungsbeispiel in der erfindungsgemäßen Anordnung. Ziel ist es, den Zündstrom auf eine vorgegebene Form als Auslösestromimpuls zu formen. Der Zündstrom kommt von der Energiereserve CER, sobald die Transistoren T1 und T2 geöffnet sind. Der Strom von der Energiereserve CER teilt sich auf in einen ersten Pfad zur Strommessstelle SS1 und in einen zweiten Pfad zur Strommessstelle SS2. Diese Strommessstellen SS1 und SS2 liefern den Messwert für die Stromregelung SR1 und SR2. Die Strommessstellen sind üblicherweise als Shunt-Widerstand ausgebildet.

Der Strom fließt dann weiter zu den Transistoren T1 und T2, die hier als Transistoren mithin Leistungsschaltern ausgebildet sind, die jedoch in ihrem Durchgangswiderstand variabel sind und entsprechend angesteuert werden. Die Stromregelung SR1 und SR2 regeln diesen Durchgangswiderstand der Transistoren T1 und T2 entsprechend. Dabei ist auch die oben beschriebene Impulsform möglich. Die so geregelten Teilauslöseströme fließen von den Transistoren T1 und T2 zu Schnittstellen des integrierten Schaltkreises FLIC und werden außerhalb des integrierten Schaltkreises FLIC additiv überlagert. Dieser additiv überlagerte Auslösestrom fließt zum Zündelement Z. Der das Zündelement durchfließenden Strom wird von der Low-Side-Schaltung, bestehend lediglich aus einem Transistor T3, aufgenommen und zur Masse abgeleitet. Dazu wird der Transistor T3 entsprechend angesteuert. Es ist möglich, dass anstatt der Transistoren T1, T2 und T3 eine Parallelschaltung einer Mehrzahl von Transistoren vorliegt.

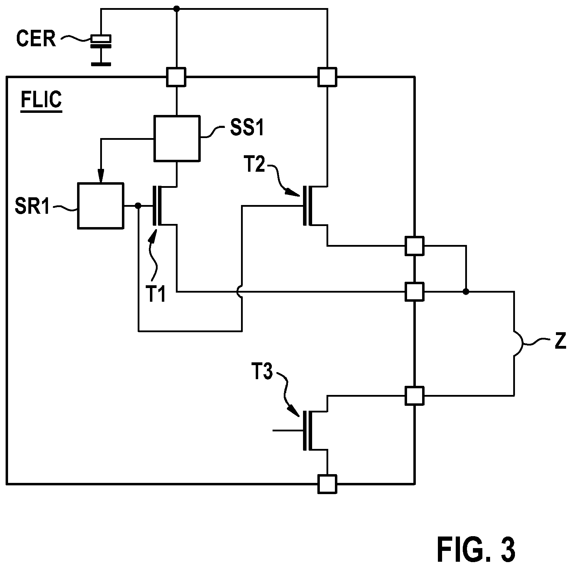

Figur 3 zeigt ein zweites Ausführungsbeispiel der erfindungsgemäßen Anordnung, wobei vorliegen gleiche Elemente mit gleichen Bezugszeichen bezeichnet sind. Wiederum gelangt der Auslösestrom von der Energiereserve CER zu den beiden Pfaden mit den Transistoren T1 und T2. Der erste Pfad hat jedoch nach wie vor die Strommessung SS1, die an die Stromregelung SR1 weitergegeben wird, aber die Stromregelung SR1 steuert nicht nur den Transistor T1 an wie bisher, sondern auch noch den Transistor T2. Damit kann die Implementierung von Stromregelung und entsprechenden Messpunkten reduziert werden. Dies kann auch für eine Mehrzahl von weiteren Transistoren ohne Stromregelung vorgenommen werden.

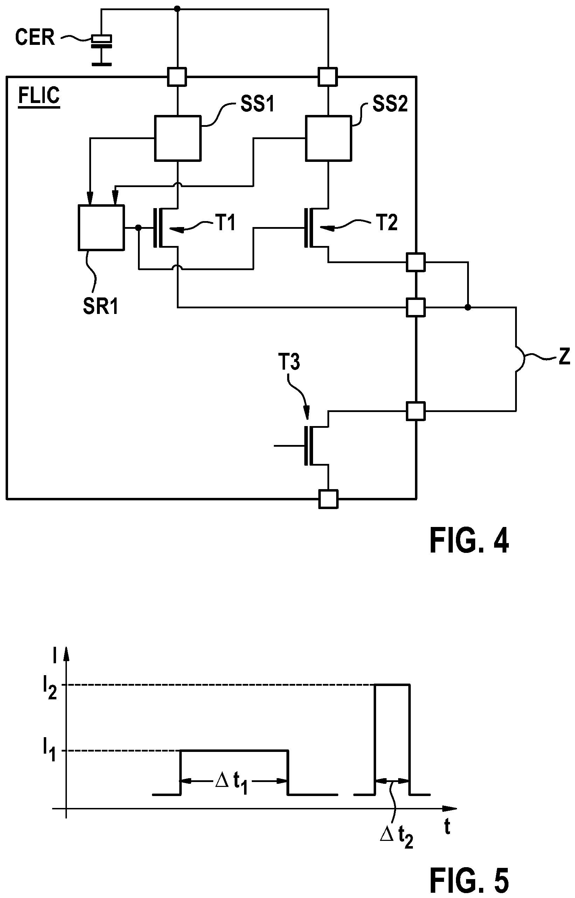

Figur 4 zeigt ein drittes Ausführungsbeispiel der erfindungsgemäßen Vorrichtung. Im Gegensatz zur vorherigen Figur ist nunmehr vorgesehen, dass die Stromregelung SR1 nicht nur den Strom SS1 misst, sondern zusätzlich noch den Strom SS2. Die Ansteuerung der Transistoren T1 und T2 erfolgt wiederum durch die Stromregelung SR1, aber nunmehr auf Basis zweier Messungen, nämlich derer SS1 und SS2. Der Transistor T3 wird wieder nur durchgeschaltet, wenn ein Auslösefall erkannt wurde.

Figur 5 erläutert in einem Stromzeitdiagramm verschiedene Beispiele, die durch die erfindungsgemäße Schaltung erreicht werden können. Zunächst wird ein breiter Puls mit Δ*T*1 gezeigt und der Amplitude I1. Es sind jedoch auch Impulse mit der Amplitude I2 und der Impulsbreite Δ*T*2 möglich.

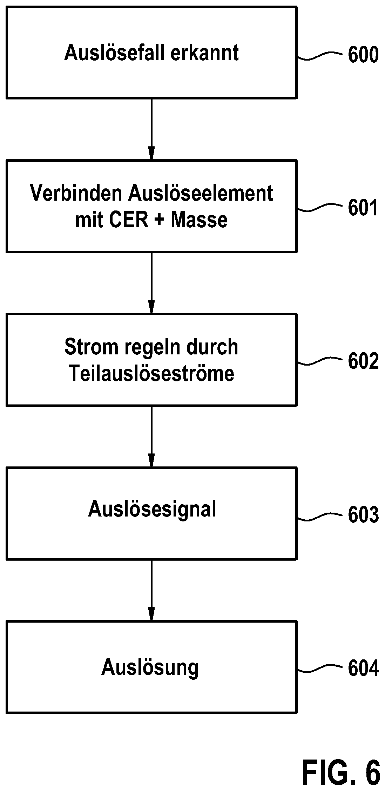

Figur 6 erläutert in einem Flussdiagramm das erfindungsgemäße Verfahren. In Verfahrensschritt 600 wird durch die Crashsensorik ein Auslösefall erkannt, in dem das Crashsignal durch den Mikrocontroller µC und den Sicherheitscontroller SCON unabhängig voneinander ausgewertet wird. Die Zusammenfügung dieser Teilergebnisse erfolgt im Endstufenschaltkreis FLIC durch eine Logik, beispielsweise ein logisches UND.

In Verfahrensschritt 601 erfolgt die Verbindung des Auslöseelements Z mit der Energiereserve und Masse durch jeweils die High-Side-Schaltung und die Low-Side-Schaltung. In Verfahrensschritt 602 erfolgt die Regelung des Auslösestroms durch die Verwendung von Teilsauslöseströmen, wie oben bereits gezeigt. In Verfahrensschritt 603 erfolgt die Ausgabe des Auslösesignals durch die Superposition der Teilansteuerströme. In Verfahrensschritt 604 erfolgt dann letztlich die Auslösung des Auslöseelements und damit des Personenschutzmittels.

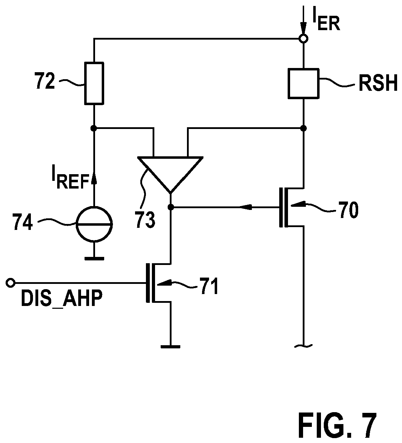

Fig. 7 zeigt eine Ausführung einer Stromregelung, die in der Highside- und/oder der Lowsideschaltung implementiert sein kann. Der Strom IER kommt von der Energiereserve CER und wird über dem Shunt-Widerstand RSH gemessen und geht in einen ersten Eingang eines Komparators 73. In den zweiten Eingang wird ein Referenzstrom IREF von einer Referenzstromquelle 74 eingegeben. Der Widerstand 72 ist so bemessen, dass die angestrebte Funktion erreicht wird. Der Ausgang des Komparators führt an das Gate des Transistors 70 und an die Source eines den Transistors 70 ansteuernden Transistors 71, der über den oben genannten Logikteil durch das Signal DIS_AHP angesteuert wird. D.h. der stromgeregelte Strom fließt durch den Transistor 71 zur Masse und führt zu einer Spannung am Gate des Transistors 70.

## Patentansprüche

1. Anordnung zur Ansteuerung von wenigstens einem Auslöseelement (Z) für ein Personenschutzmittel mit:
- einer High-Side-Schaltung (HS), die eine erste Verbindung von einer Energiequelle (CER) zu dem wenigstens einen Auslöseelement (Z) herstellt,
- einer Low-Side-Schaltung (LS), die eine zweite Verbindung von dem wenigstens einen Auslöseelement zur Masse herstellt,
- wobei die High-Side-Schaltung (HS) und/oder die Low-Side-Schaltung (LS) jeweils wenigstens zwei parallel geschaltete Endstufen für eine Regelung des Auslösestroms pro Auslöseelement (Z) aufweisen, wobei zumindest eine der wenigstens zwei parallel geschalteten Endstufen eine erste Stromregelung und einen oder mehrere parallel geschaltete Transistoren aufweist,
- **dadurch gekennzeichnet, dass** die parallel geschalteten Endstufen auf einem integrierten Schaltkreis (FLIC) angeordnet sind und eine Zusammenfassung der Teilauslöseströme außerhalb des integrierten Schaltkreises (FLIC) erfolgt.

2. Anordnung nach Anspruch 1, **dadurch gekennzeichnet, dass** jede Endstufe nur eine dieser Endstufe zugeordneten zweiten Stromregelung aufweist.

3. Anordnung nach Anspruch 1, **dadurch gekennzeichnet, dass** nur eine einzige Endstufe eine nur ihr zugeordneten einzige dritte Stromregelung aufweist und diese dritte Stromregelung wenigstens eine weitere Endstufe für die Regelung des Auslösestroms ansteuert.

4. Anordnung nach Anspruch 3, **dadurch gekennzeichnet, dass** die einzige dritte Stromregelung alle Teilauslöseströme, die zu den jeweiligen Endstufen fließen, misst und in Abhängigkeit von diesen Messungen den oder die Transistoren ansteuert.

5. Anordnung nach einem der vorhergehenden Ansprüche, **dadurch gekennzeichnet, dass** die High-Side- Schaltung (HS) und die Low-Side-Schaltung (LS) auf dem integrierten Schaltkreis (FLIC) angeordnet sind.

6. Anordnung nach einem der vorhergehenden Ansprüche, **dadurch gekennzeichnet, dass** die Regelung des Auslösestroms derart erfolgt, dass wenigstens ein Auslösestromimpuls mit durch die jeweilige Stromregelung eingestellter Dauer und Höhe für das wenigstens eine Auslöseelement erzeugt wird.

7. Verfahren zur Ansteuerung von wenigstens einem Auslöseelement (Z) für ein Personenschutzmittel mit folgenden Verfahrensschritten:
- Herstellen einer ersten Verbindung des wenigstens einen Auslöseelements mit einer Energiequelle (CER) durch eine High-Side-Schaltung (HS)
- Herstellen einer zweiten Verbindung des wenigstens eine Auslöseelements (Z) zur Masse (M) durch eine Low-Side-Schaltung (LS) **gekennzeichnet, durch** folgende Verfahrensschritte:
- Regeln des Auslösestroms pro Auslöseelement (Z) **durch** eine Parallelschaltung von den wenigstens zwei Endstufen (T1, T2), die der High- Side- und/oder der Low-Side-Schaltung jeweils zugeordnet sind, wobei zumindest eine der wenigstens zwei Endstufen eine erste Stromregelung und einen oder mehrere parallel geschaltete Transistoren aufweist, wobei die parallel geschalteten Endstufen auf einem integrierten Schaltkreis (FLIC) angeordnet sind und eine Zusammenfassung der Teilauslöseströme außerhalb des integrierten Schaltkreises (FLIC) erfolgt.

8. Verfahren nach Anspruch 7, **dadurch gekennzeichnet, dass** nur eine einzige Endstufe mit einer nur ihr zugeordneten einzigen zweiten Stromregelung verbunden ist und diese zweite Stromregelung wenigstens eine weitere Endstufe für die Regelung des Auslösestroms ansteuert.

9. Verfahren nach Anspruch 7 oder 8, **dadurch gekennzeichnet, dass** die Regelung des Auslösestroms derart erfolgt, dass wenigstens ein Auslösestromimpuls mit durch die Stromregelung eingestellter Dauer und Höhe für das wenigstens eine Auslöseelement (Z) erzeugt wird.

## Claims

1. Arrangement for driving at least one trigger element (Z) for a person protection means comprising:
- a high-side circuit (HS), which establishes a first connection from an energy source (CER) to the at least one trigger element (Z),
- a low-side circuit (LS), which establishes a second connection from the at least one trigger element to earth,
- wherein the high-side circuit (HS) and/or the low-side circuit (LS) in each case comprise(s) at least two parallel-connected output stages for a regulation of the trigger current per trigger element (Z), wherein at least one of the at least two parallel-connected output stages comprises a first current regulation and one or a plurality of parallel-connected transistors,
- **characterized in that** the parallel-connected output stages are arranged on an integrated circuit (FLIC) and the partial trigger currents are combined outside the integrated circuit (FLIC).

2. Arrangement according to Claim 1, **characterized in that** each output stage comprises only one second current regulation assigned to this output stage.

3. Arrangement according to Claim 1, **characterized in that** only a single output stage comprises a single third current regulation assigned only to it, and this third current regulation drives at least one further output stage for the regulation of the trigger current.

4. Arrangement according to Claim 3, **characterized in that** the single third current regulation measures all partial trigger currents that flow to the respective output stages and drives the transistor or transistors depending on these measurements.

5. Arrangement according to any of the preceding claims, **characterized in that** the high-side circuit (HS) and the low-side circuit (LS) are arranged on the integrated circuit (FLIC).

6. Arrangement according to any of the preceding claims, **characterized in that** the trigger current is regulated in such a way that at least one trigger current pulse with duration and height set by the respective current regulation is generated for the at least one trigger element.

7. Method for driving at least one trigger element (Z) for a person protection means comprising the following method steps:
- establishing a first connection of the at least one trigger element to an energy source (CER) by means of a high-side circuit (HS),
- establishing a second connection of the at least one trigger element (Z) to earth (M) by means of a low-side circuit (LS), **characterized by** the following method steps:
- regulating the trigger current per trigger element (Z) by means of a parallel connection of the at least two output stages (T1, T2) which are respectively assigned to the high-side and/or the low-side circuit, wherein at least one of the at least two output stages comprises a first current regulation and one or a plurality of parallel-connected transistors, wherein the parallel-connected output stages are arranged on an integrated circuit (FLIC) and the partial trigger currents are combined outside the integrated circuit (FLIC).

8. Method according to Claim 7, **characterized in that** only a single output stage is connected to a single second current regulation assigned only to it and this second current regulation drives at least one further output stage for the regulation of the trigger current.

9. Method according to Claim 7 or 8, **characterized in that** the trigger current is regulated in such a way that at least one trigger current pulse with duration and height set by the current regulation is generated for the at least one trigger element (Z).

## Revendications

1. Dispositif pour commander au moins un élément de déclenchement (Z) pour un moyen de protection des personnes, comportant :
- un circuit côté haut (HS), qui établit une première connexion d'une source d'énergie (CER) à l'au moins un élément de déclenchement (Z),
- un circuit côté bas (LS), qui établit une deuxième connexion de l'au moins un élément de déclenchement à la masse,
- dans lequel le circuit côté haut (HS) et/ou le circuit côté bas (LS) comportent respectivement au moins deux étages d'extrémité connectés en parallèle pour une régulation du courant de déclenchement pour chaque élément de déclenchement (Z), dans lequel au moins l'un des au moins deux étages d'extrémité connectés en parallèle comporte une première régulation régulation de courant et un ou plusieurs transistors connectés en parallèle,
- **caractérisé en ce que** les étages d'extrémité connectés en série sont disposés sur un circuit intégré (FLIC) et **en ce qu'**un prélèvement des courants de déclenchement partiels est effectué à l'extérieur du circuit intégré (FLIC).

2. Dispositif selon la revendication 1, **caractérisé en ce que** chaque étage d'extrémité ne comporte qu'une seule deuxième régulation de courant associée audit étage d'extrémité.

3. Dispositif selon la revendication 1, **caractérisé en ce qu'**un unique étage d'extrémité présente une troisième régulation de courant qui lui est associée et **en ce que** ladite troisième régulation de courant commande au moins un autre étage d'extrémité pour la régulation du courant de déclenchement.

4. Dispositif selon la revendication 3, **caractérisé en ce que** l'unique troisième régulation de courant mesure la totalité des courants de déclenchement partiels qui passent vers les étages d'extrémité respectifs et **en ce qu'**elle commande le ou les transistor(s) en fonction desdites mesures.

5. Dispositif selon l'une quelconque des revendications précédentes, **caractérisé en ce que** le circuit côté haut (HS) et le circuit côté bas (LS) sont disposés sur le circuit intégré (FLIC).

6. Dispositif selon l'une quelconque des revendications précédentes, **caractérisé en ce que** la régulation du courant de déclenchement est effectuée de manière à ce qu'au moins une impulsion de courant de déclenchement soit générée pour l'au moins un élément de déclenchement avec une durée réglée par l'intermédiaire de la régulation de courant respective.

7. Procédé pour la commande d'au moins un élément de déclenchement (Z) pour un moyen de protection des personnes, comportant les étapes consistant à :
- établir une première connexion de l'au moins un élément de déclenchement à une source d'énergie (CER) par l'intermédiaire d'un circuit côté haut (HS),
- établir une deuxième connexion de l'au moins un élément de déclenchement (Z) à la masse (M) par l'intermédiaire d'un circuit côté bas (LS), **caractérisé par** les étapes de procédé consistant à :
- réguler le courant de déclenchement pour chaque élément de déclenchement (Z) par une connexion en parallèle des au moins deux étages d'extrémité (T1, T2), qui sont respectivement associés aux circuits côté haut et/ou côté bas, dans lequel au moins l'un des au moins deux étages d'extrémité comporte une première régulation de courant et un ou plusieurs transistors connectés en parallèle, dans lequel les étages d'extrémité connectés en parallèle sont disposés sur un circuit intégré (FLIC) et en ce qu'un prélèvement des courants de déclenchement partiels est effectué à l'extérieur du circuit intégré (FLIC).

8. Procédé selon la revendication 7, **caractérisé en ce qu'**un unique étage d'extrémité n'est connecté qu'à une deuxième régulation de courant unique qui lui est associée, et **en ce que** ladite deuxième régulation de courant commande au moins un autre étage d'extrémité pour la régulation du courant de déclenchement.

9. Procédé selon la revendication 7 ou 8, **caractérisé en ce que** la régulation du courant de déclenchement est effectuée de manière à ce qu'au moins une impulsion de courant de déclenchement soit générée pour l'au moins un élément de déclenchement (Z) avec une durée et une hauteur réglées par la régulation de courant.
